# EUROPEAN PATENT APPLICATION

(11) **EP 1 643 243 A1**
(43) Date of publication of application: **05.04.2006**
(21) Application number: 05021308.1
(22) Date of filing: 29.09.2005
(51) Int. Cl.: G01N 27/407, G01N 27/12

(54) **Gas sensor**

(30) Priority: 30.09.2004 JP 2004287564
(71) Applicant: TDK Corporation, Tokyo 103-8272 (JP)
(72) Inventor: Ono, Shizuko, Tokyo 103-8272 (JP); Itoh, Yuugi, Tokyo 103-8272 (JP)
(74) Representative: Grünecker, Kinkeldey, Stockmair & Schwanhäusser Anwaltssozietät

(57) **Abstract**

A gas sensor comprises a sensor element part (10,20,30,40) for chemically detecting a gas; and a moisture eliminating part (50), provided in contact with the sensor element part, for eliminating moisture.

## Description

### BACKGROUND OF THE INVENTION

### Field of the Invention

The present invention relates to a gas sensor equipped with a sensor element part which chemically detects a gas.

### Related Background Art

Solid electrolyte type gas sensors, semiconductor type gas sensors, and the like have been known as gas sensors which chemically detect specific gases in environments. For example, a solid electrolyte type gas sensor includes a sensor element part in which a sensing electrode having a gas detecting part and a counter electrode are provided on a solid electrolyte substrate formed from a solid electrolyte, and detects a gas according to a change in the electromotive force between the sensing electrode and counter electrode between before and after the gas detecting part and the gas to be detected come into contact with each other, a limiting current occurring upon contact with the gas to be detected, and the like. On the other hand, for example, a semiconductor type gas sensor includes a sensor element part having a gas detecting part constituted by a metal oxide semiconductor and a pair of electrodes electrically connected to the gas detecting part, and detects a gas according to a change in electric resistance in the gas detecting part between before and after the gas detecting part and the gas to be detected come into contact with each other or the like.

In general, the gas detecting parts of these gas sensors are constructed by a porous gas detecting material containing a metal compound such as metal salt or metal oxide, though this gas detecting material is often susceptible to the moisture in the atmosphere. When the moisture in the atmosphere is condensed and attached to the surface of the gas detecting part in a nonoperating state, it may take a long time until a gas detecting operation can stably be performed after activation. For preventing the moisture from thus becoming influential, a gas sensor containing zeolite in a gas detecting material has been proposed (Japanese Patent Application Laid-Open No. HEI 11-174024), for example.

Also known is a gas sensor in which, in order to suppress influences of an organic gas mixed with a gas to be detected, a gas sensor device is accommodated in a housing having an opening, whereas a filter made of zeolite is provided at the opening (Japanese Patent Publication No. 2947381).

### SUMMARY OF THE INVENTION

However, the conventional gas sensors have not always been considered to be sufficiently prevented from being influenced by the moisture in the atmosphere. While a gas sensor operates by heating its gas detecting part to a high temperature of several hundred degrees in general, condensation is likely to occur when the temperature of the gas sensor drops after the heating is stopped, and this condensation lowers performances of the gas sensor and increases the time required for stabilization after activation. In the case of a gas sensor in which a filter is provided at an opening of a housing as in Japanese Patent Publication No. 2947381 mentioned above in particular, the inside of the housing attains an airtight state to a certain extent, so that condensation is likely to occur on the gas sensor element surface at the time of cooling.

In the case of a gas sensor such as one disclosed in Japanese Patent Publication No. 2947381, the housing is needed to increase its size to a certain extent in order to secure a space for mounting a filter, whereby the apparatus is harder to reduce its size. Further, the gas to be detected is always required to pass through the filter in order to come into contact with the gas sensor device, so that the gas sensor is not satisfactory in terms of detection sensitivity, either.

As disclosed in Japanese Patent Application Laid-Open No. HEI 11-174024, in the case of one in which a gas detecting material contains zeolite acting as a material for absorbing the moisture together with a material such as metal carbonate adapted to react with a gas, though it is considered possible to eliminate the problem of condensation to a certain extent, the detection sensitivity of the gas detecting material itself decreases, since a material not contributing to gas detection is mixed therewith.

In view of circumstances mentioned above, it is an object of the present invention to provide a gas sensor which sufficiently prevents condensation from occurring, can reduce the size of the apparatus, and has a sufficient detection sensitivity.

For solving the problems mentioned above, the gas sensor in accordance with the present invention comprises a sensor element part for chemically detecting a gas; and a moisture eliminating part, provided in contact with the sensor element part, for eliminating moisture.

Since the moisture eliminating part for eliminating moisture is provided in contact with the sensor element part, the gas sensor in accordance with the present invention can eliminate the moisture from the atmosphere in the vicinity of the sensor element part without keeping the atmosphere airtight, and can fully prevent condensation from occurring. It is also advantageous in making the apparatus smaller, since the moisture eliminating part is constructed in a state integrated with the sensor element part. Further, since the moisture eliminating part is provided as an additional part separately from the sensor element part, the detection sensitivity of the sensor element part does not decrease, whereby a gas sensor having a sufficient detection sensitivity is obtained.

The moisture eliminating part is preferably made of a porous body, since it can eliminate the moisture at a particularly high efficiency.

Preferably, in the gas sensor in accordance with the present invention, the sensor element part includes a solid electrolyte substrate containing a solid electrolyte, and a sensing electrode and counter electrode provided in contact with the solid electrolyte substrate, whereas the moisture eliminating part is provided so as to cover at least a part of a surface of the sensing electrode. When the moisture eliminating part is provided so as to cover the sensing electrode surface in such a so-called solid electrolyte type gas sensor, the moisture can be eliminated more efficiently from the atmosphere in the vicinity of the sensing electrode susceptible to the moisture.

For more reliably preventing the moisture from becoming influential in a high humidity environment or the like, it will be preferred if the moisture eliminating part is provided so as to cover the whole surface of the sensing electrode. When it is more important to make the apparatus smaller and lighter and improve the detection sensitivity, on the other hand, it will be preferred if the moisture eliminating part is provided so as to expose a part of the surface of the sensing electrode.

Alternatively, the moisture eliminating part may be provided so as to cover a peripheral part of the sensing electrode and a surface of the solid electrolyte substrate around the detecting electrode. This can efficiently eliminate the moisture from near the sensing electrode, and makes it harder for the sensing electrode to peel off from the solid electrolyte substrate.

Preferably, in the gas sensor of the present invention, the sensor element part comprises a gas detecting part containing an oxide semiconductor and a pair of electrodes electrically connected to the gas detecting part, whereas the moisture eliminating part is provided so as to cover at least a part of a surface of the gas detecting part. When the moisture eliminating part is provided so as to cover the surface of the gas detecting part, such a so-called semiconductor type gas sensor can more efficiently eliminate the moisture from the atmosphere in the vicinity of the gas detecting part susceptible to the moisture.

### BRIEF DESCRIPTION OF THE DRAWINGS

Fig. 1 is a plan view showing a first embodiment of the gas sensor in accordance with the present invention.

Fig. 2 is an end view taken along the line II-II of Fig. 1.

Fig. 3 is an end view showing a modified example of the first embodiment of the gas sensor in accordance with the present invention.

Fig. 4 is an end view showing a modified example of the first embodiment of the gas sensor in accordance with the present invention.

Fig. 5 is an end view showing a modified example of the first embodiment of the gas sensor in accordance with the present invention.

Fig. 6 is an end view showing a second embodiment of the gas sensor in accordance with the present invention.

### DESCRIPTION OF THE PREFERRED EMBODIMENTS

In the following, preferred embodiments of the present invention will be explained in detail with reference to the drawings. However, the present invention will not be limited to the following embodiments.

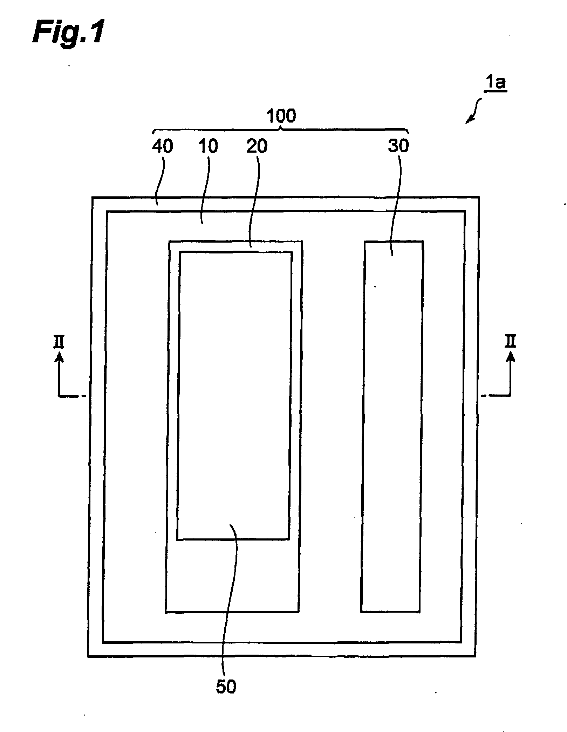

Fig. 1 is a plan view showing a first embodiment of the gas sensor in accordance with the present invention. The gas sensor 1a shown in Fig. 1 comprises a gas sensor element part 100 constituted by a solid electrolyte substrate 10 containing a solid electrolyte, a sensing electrode 20 and a counter electrode 30 which are provided in contact with the solid electrolyte substrate 10 on one surface of the solid electrolyte substrate 10, and a heating part 40 provided on a surface of the solid electrolyte substrate 10 on the side opposite from the sensing electrode 20 and counter electrode 30. Namely, the gas sensor 1a is a so-called solid electrolyte type gas sensor, and can favorably be used as carbon dioxide gas sensors, hydrogen gas sensors, nitrogen oxide gas sensors, carbon monoxide gas sensors, and the like. The gas sensor 1a further comprises a moisture eliminating part 50, provided so as to cover a part of the surface of the sensing electrode 20, for eliminating the moisture from within the atmosphere.

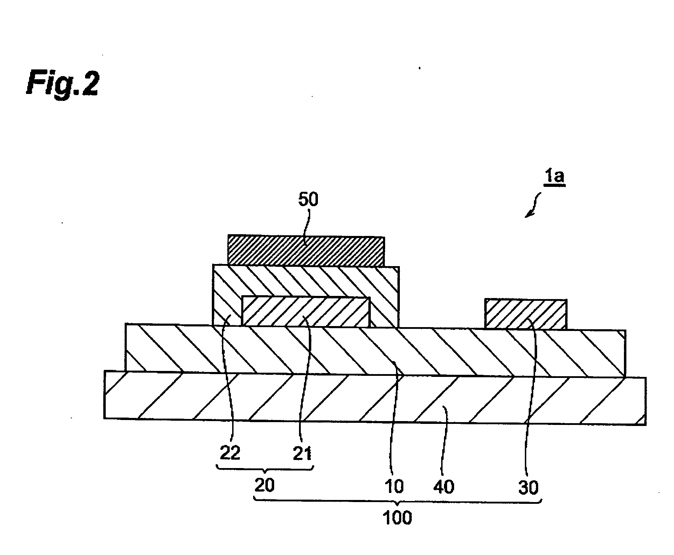

Fig. 2 is an end view taken along the line II-II of Fig. 1. As shown in Fig. 2, the sensing electrode 20 includes a metal layer 21 provided as a collector in contact with the solid electrolyte substrate 10, and a gas detecting part 22 provided in contact with the metal layer 21 so as to cover the latter. The moisture eliminating part 50 is provided in contact with the gas detecting part 22 so as to cover a part of the surface of the gas detecting part 22.

A gas detecting material constituting the gas detecting part 22 causes a chemical equilibrium reaction when in contact with a gas to be detected such as carbon dioxide gas. This chemical equilibrium reaction changes the electromotive force between the sensing electrode 20 and counter electrode 30, whereas the gas is detected according to the change in electromotive force.

The gas detecting material is constituted by a porous body formed by a metal compound such as metal salt or metal oxide which can cause a chemical equilibrium reaction with a gas to be detected. If condensation occurs on the surface of the gas detecting material, the gas cannot be detected normally. Since the moisture eliminating part 50 is provided in contact with the gas sensor element part 100, the gas sensor 1a sufficiently prevents the condensation from occurring, while keeping a high detection sensitivity and the mechanical strength of the gas detecting part. Since the moisture eliminating part 50 is integrated with the gas sensor element part 100, the apparatus can be made smaller. The moisture absorbed by the moisture eliminating part 50 and the like at the time when the gas sensor 1a does not operate is eliminated from within the moisture eliminating part 50 by the heat transmitted from the heating part 40 after activation, so that the moisture is not accumulated in the moisture eliminating part 50 even when the gas sensor 1a is used for a long period, whereby the moisture eliminating efficiency is harder to decrease.

The moisture eliminating part 50 is made of a porous body having such a small pore size as to absorb the moisture and transmit therethrough the gas to be detected, and is preferably a porous body having a small average pore size of 0.3 to 1 nm. Examples of materials constituting the porous body include zeolite, aluminum phosphate, alumina, silica, and boron nitride, among which zeolite, alumina, and silica which can absorb the moisture at a particularly high efficiency are preferred.

The thickness of the moisture eliminating part 50 is preferably 10 nm to 1 mm. When the thickness is less than 10 nm, the moisture eliminating efficiency tends to decrease. When the thickness exceeds 1 mm, the gas to be detected is harder to reach the gas detecting part 22, whereby the detection sensitivity tends to decrease. Such a moisture eliminating part 50 can be formed by a conventionally known method such as a paste method.

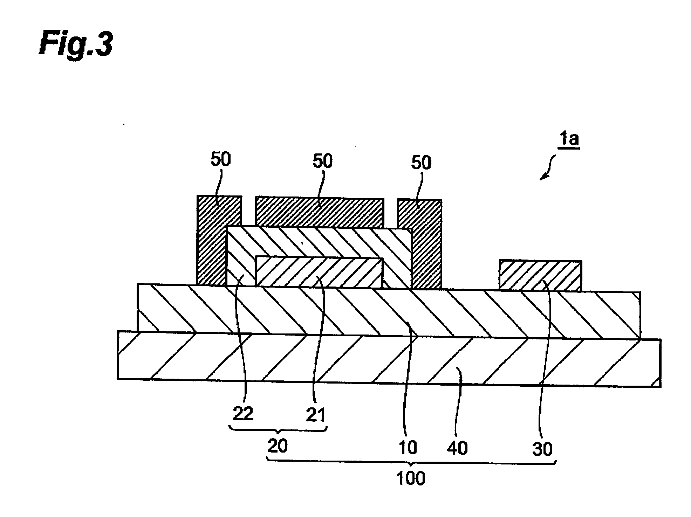

Instead of the mode mentioned above, the moisture eliminating part 50 may cover the sensing electrode 20 such that the surface of the sensing electrode 20 on the side opposite from the solid electrolyte substrate 10 is partly exposed as shown in the end view of Fig. 3, for example. From the viewpoint of satisfying both the detection sensitivity and moisture eliminating efficiency, it will be preferred in particular if the surface of the sensing electrode 20 is exposed in a region about the metal layer 21.

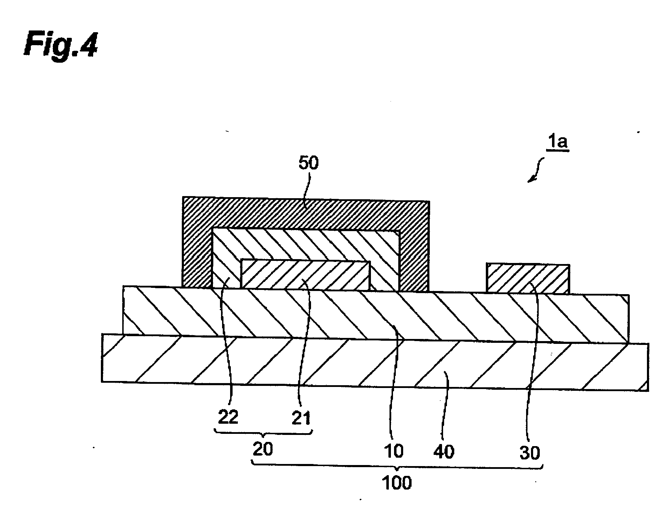

When the moisture eliminating efficiency is to be enhanced in particular as in the case necessitating an operation in a high-humidity environment, for example, it will be preferred if the moisture eliminating part 50 is provided so as to cover the whole surface of the sensing electrode 20 as shown in the end face view of Fig. 4.

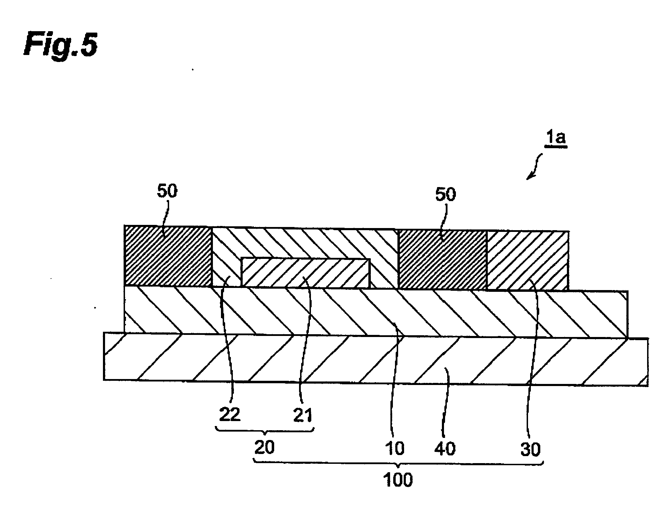

As shown in the end view of Fig. 5, the moisture eliminating part 50 may be provided so as to cover the peripheral part of the sensing electrode 20 and the surface of the solid electrolyte substrate 10 around the sensing electrode 20. This improves the detection sensitivity in particular, and enhances the peel strength of the sensing electrode 20 from the solid electrolyte substrate 10. In this case, it will be preferred if the respective surfaces of the sensing electrode 20, counter electrode 30, and moisture eliminating part 50 on the side opposite from the solid electrolyte substrate 10 form a flat surface in the same plane as shown in Fig. 5. This eliminates projections due to the sensing electrode 20 and counter electrode 30, so as to prevent electrodes from chipping, etc., whereby the handling property of the gas sensor improves.

The moisture eliminating part 50 is not limited to the modes shown in Figs. 1 to 5 as long as it is provided in contact with the gas sensor element part 100. For example, the moisture eliminating part 50 may be provided so as to cover the counter electrode 30, or in contact with the heating part 40 on the heating part 40 side.

The solid electrolyte constituting the solid electrolyte substrate 10 in the gas sensor element part 100 is a solid-state ionic conductor. Examples of the ionic conductor include metal ionic conductors such as NASICON represented by Na₁₊ₓZr₂SiₓP₃₋ₓO₁₂ (x = 0 to 3), yttria-stabilized zirconia (YSZ) in which zirconia (ZrO₂) is stabilized by yttria (Y₂O₃), and barium/cerium-based oxides containing a rare-earth element. When the gas sensor 1a is used as a carbon dioxide sensor, NASICON is preferred as the solid electrolyte.

The solid electrolyte substrate 10 usually has a thickness on the order of 1 µm to 1 mm and a main surface area on the order of 1 µm² to 200 mm². Such a solid electrolyte substrate 10 is prepared by a usually employed method such as a solid phase method, a sol-gel method, or a coprecipitation method, preferably the solid phase method.

The metal layer 21 constituting the sensing electrode 20 is formed by a metal material having such a conductivity as to be able to function as a collector. Preferably usable examples of the metal material include gold, platinum, silver, rubidium, rhodium, palladium, iridium, nickel, copper, chromium, and their alloys.

The metal layer 21 has a thickness on the order of 0.01 to 10 µm and a main surface area on the order of 0.1 µm² to 200 mm². For efficiently dispersing a gas to be detected within the sensing electrode 20, the metal layer 21 is preferably a porous body. Such a metal layer 21 can be formed by a method of applying a mixed liquid containing a paste of metal powder by screen printing or the like, or sputtering, for example.

The gas detecting material constituting the gas detecting part 22 is not limited in particular as long as it is a material which causes a chemical equilibrium reaction when brought into contact with a gas to be detected and can detect the gas. Preferably employed are metal carbonates, metal oxides, and the like in the case of carbon dioxide gas sensors, metal oxides and the like in the case of hydrogen gas sensors, and metal nitrites and the like in the case of nitrogen oxide gas sensors, for example.

The gas detecting part 22 usually has a thickness on the order of 0.01 µm to 1 mm, and can be formed by employing a conventionally known method such as a paste method in which a paste having metal compound particles dispersed in a solvent as mentioned above is applied in contact with the metal layer 21, so as to form a paste layer, which is then heated so as to eliminate the solvent therefrom.

The counter electrode 30 usually has a thickness on the order of 0.01 µm to 1 mm, and can be formed by employing the same metal material and method as those mentioned above in connection with the metal layer 21. For restraining performances from being lowered by the moisture in the air, it will be preferred if the counter electrode 30 is further provided with a protective layer covering the layer made of the metal material. The protective layer is preferably formed from fluorine-based resins, ceramics, cobaltates, and the like. It is not always necessary for the counter electrode to be provided on the same side of the solid electrolyte substrate as with the sensing electrode as in the gas sensor 1a. The sensing electrode and counter electrode may be disposed on respective sides opposite from each other holding therebetween the substrate containing the solid electrolyte.

The heating part 40 is provided mainly for the purpose of heating the sensing electrode 20 to a predetermined temperature at which the latter can stably perform a detecting action, and is constituted by a heating resistor which generates heat upon energization, such as ruthenium oxide.

The gas sensor 1a is used in a state connected to an external circuit for measuring the electromotive force between the sensing electrode 20 and counter electrode 30, and an external circuit for energizing the heating part 40. The gas sensor 1a as a whole may be mounted within a housing having an opening for ventilation. Preferably, for example, a mesh cover is attached to the opening in this case, so as to prevent human hands from coming into contact with the gas sensor 1a and keep a favorable state of ventilation.

While solid electrolyte type gas sensors include those of electromotive force type which detect a gas according to a change in the electromotive force as with the gas sensor la, so-called limiting current type gas sensors, and the like, the present invention can favorably be employed in the limiting current type gas sensors and the like as well.

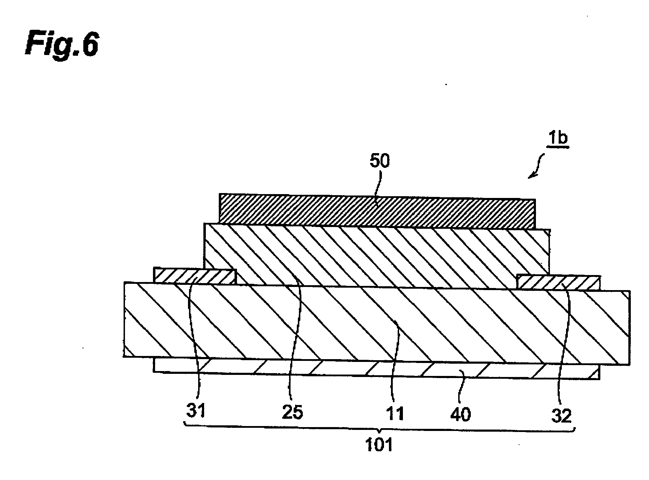

Fig. 6 is an end view showing a second embodiment of the gas sensor in accordance with the present invention. The sensor element part 101 of the gas sensor 1b shown in Fig. 6 is constituted by an insulating substrate 11; a gas detecting part 25 provided on one surface of the insulating substrate 11 and made of a gas detecting material containing an oxide semiconductor, a pair of electrodes 31, 32 electrically connected to the gas detecting part 25 while in contact therewith; and a heating part 40 provided on the surface of the insulating substrate 11 on the side opposite from the gas detecting part 25. Namely, the gas sensor 1b is a so-called semiconductor type gas sensor, and can favorably be used as a hydrogen gas sensor, combustible gas sensor, alcohol gas sensor, VOC sensor, or the like. The gas sensor 1b further comprises a moisture eliminating part 50 disposed on the surface of the gas detecting part 25 on the side opposite from the insulating substrate 11 while in contact with the gas detecting part 25.

The moisture eliminating part 50 is the same as that in the above-mentioned first embodiment and can be formed by the same method as that explained in connection with the first embodiment. As in the first embodiment, the moisture eliminating part 50 may be provided so as to cover the gas detecting part 25 as a whole or a peripheral part thereof The moisture eliminating part 50 may be formed with a plurality of grooves in any form of meshes, stripes, and the like where the surface of the gas detecting part 25 is exposed.

The gas detecting part 25 is a porous body constituted by an oxide semiconductor which changes its electric resistance between before and after coming into contact with a reducing gas to be detected. This oxide semiconductor is appropriately chosen according to species of gases to be detected and the like. For example, metal oxides such as zinc oxide and tin oxide, and mixed oxides combining the former oxides with rare-earth oxides are favorably used.

The gas sensor element part 101 can be formed, for example, by forming a pair of electrodes 31, 32 from a conductive material such as gold or platinum on an insulating substrate 11 made of an insulating material such as alumina; then forming a gas detecting part 25 in contact with the pair of electrodes 31, 32; and further forming a thin film of heating resistor on the surface of the insulating substrate 11 on the side opposite from the gas detecting part 25, thereby yielding a heating part 40. Each constituent part can be formed by a conventionally known method such as paste method or sputtering method.

Then, a moisture eliminating part 50 made of a porous material such as zeolite is formed by a paste method or the like so as to be in contact with the gas detecting part 25, whereby the gas sensor 1b is obtained.

The gas sensor 1b is used in a state connected to an external circuit for measuring the electric resistance between a pair of electrodes 31, 32, and an external circuit for energizing the heating part 40. As with the gas sensor 1a, the gas sensor 1b as a whole may be mounted in a housing having an opening for ventilation.

### Examples

In the following, the present invention will be explained more specifically with reference to an example and a comparative example. However, the present invention is not limited to the following example.

### Example 1

In the following manner, a carbon dioxide gas sensor having the same configuration as with the gas sensor 1a shown in Figs. 1 and 2 was made.
First, a NASICON substrate having a rectangular main surface (4 mm x 4 mm) with a thickness of 0, 5 mm was prepared as a solid electrolyte substrate, and a metal layer and an counter electrode each made of Au having a thickness of 0.1 µm were formed by a sputtering method on the NASICON substrate. Subsequently, a gas detecting part having a thickness of 20 µm using a mixture made of a mixed salt of barium carbonate and lithium carbonate and indium oxide as a gas detecting material was formed by a paste method so as to cover only the metal layer of the sensing electrode. Further, a thin film of Pt as a heating part was formed by sputtering on the surface of the NASICON substrate on the side opposite from the gas detecting part, so as to yield a gas sensor element part.
Subsequently, a moisture eliminating part made of a zeolite powder (type 3A; manufactured by Nippon Chemical Industrial Co., Ltd.) was formed by a paste method so as to cover the upper face of the gas detecting part in the sensing electrode. The thickness of the moisture eliminating part formed at this time was 200 µm.
The gas sensor element part equipped with the moisture eliminating part was mounted on a bottom part within a cylindrical housing (with an inner diameter of 10 mm and a height of 15 mm) having an opening at a leading end part thereof, so as to yield a carbon dioxide gas sensor.

### Comparative Example 1

A gas sensor element part obtained as in Example 1 without the moisture eliminating part was mounted on a bottom part within a cylindrical housing (with an inner diameter of 10 mm and a height of 15 mm) having an opening at a leading end part thereof, and a layer having a thickness of 5 mm filled with the zeolite powder was attached to the opening, so as to yield a carbon dioxide gas sensor.

### Evaluation of Carbon Dioxide Gas Sensor

In the following manner, the detection sensitivity, activation characteristic, and occurrence of condensation were evaluated in each of the respective carbon dioxide gas sensors obtained by the above-mentioned example and comparative example.

### Detection Sensitivity and Activation Characteristic

Each carbon dioxide gas sensor was arranged within a cell having a predetermined size, whereas a pure airflow containing 500 ppm of carbon dioxide gas at 30% RH was circulated in the cell at a flow rate of 0.1 L/min. While measuring the electromotive force between the sensing electrode and the counter electrode with a voltmeter in this state, the time elapsed until the fluctuation per hour of output value became less than 1(%/hr) and stabilized after activating the heater of the carbon dioxide gas sensor at a set temperature of 380°C was taken as stabilization time.
After the stabilization, the carbon dioxide gas sensor was heated to 380°C, the carbon dioxide gas concentration in the pure airflow was changed to 5000 ppm at 25°C, 30% RH. Then, the value of difference (E₁―E₀) between the electromotive force E₁ at the carbon dioxide gas concentration of 5000 ppm and the electromotive force (base value) E₀ at the carbon dioxide gas concentration of 500 ppm was taken as detection sensitivity.
Further, after the initial characteristic evaluation mentioned above, the current to the heater was once turned off, so that the heater was cooled naturally to room temperature. Thereafter, the carbon dioxide gas sensor was left for 24 hours in an environment at 95% RH and then was driven again, whereupon the detection sensitivity and stabilization time were measured as mentioned above.
Table 1 shows results of detection sensitivity and stabilization time as relative values taking those of Comparative Example 1 as 100.

### Occurrence of Condensation

After leaving each carbon dioxide gas sensor for 24 hours while heating it to 380°C in a cell in which a pure airflow containing 500 ppm of carbon dioxide gas at 25°C, 95% RH was circulated at a flow rate of 0.1 L/min, the heating was stopped, so that the carbon dioxide gas sensor was naturally cooled to room temperature. At this time, the occurrence of condensation on the surface of the gas sensor element part was visually observed.

**TABLE 1**

| | Initial characteristics | | | Characteristics after reactivation | | | Condensation |
|---|---|---|---|---|---|---|---|
| | Base value | Detection sensitivity | Stabilization time | Base value | Detection sensitivity | Stabilization time | |
| Example 1 | 125 | 95 | 87 | 122 | 95 | 90 | no |
| Comparative Example 1 | 100 | 100 | 100 | 170 | 73 | 250 | yes |

As shown in Table 1, the carbon dioxide gas sensor of Example 1 was excellent in the detection sensitivity after reactivation in particular, while its stabilization time was much shorter than that of Comparative Example 1. Condensation was seen in Comparative Example 1 but not in Example 1. Therefore, it has been verified that the present invention yields a gas sensor which fully prevents condensation from occurring while having a sufficient detection sensitivity and a short activation time.

The present invention provides a gas sensor which fully prevents condensation from occurring, can reduce the size of the apparatus, and has a sufficient detection sensitivity.

## Claims

1. A gas sensor comprising:
a sensor element part for chemically detecting a gas; and
a moisture eliminating part, provided in contact with the sensor element part, for eliminating moisture.

2. A gas sensor according to claim 1,
wherein the moisture eliminating part is made of a porous body.

3. A gas sensor according to claim 1 or 2,
wherein the sensor element part includes:
a solid electrolyte substrate containing a solid electrolyte; and
a sensing electrode and counter electrode provided in contact with the solid electrolyte substrate; and
wherein the moisture eliminating part is provided so as to cover at least a part of a surface of the sensing electrode.

4. A gas sensor according to claim 3,
wherein the moisture eliminating part is provided so as to cover the whole surface of the sensing electrode.

5. A gas sensor according to claim 3,
wherein the moisture eliminating part is provided so as to expose a part of the surface of the sensing electrode.

6. A gas sensor according to claim 3,
wherein the moisture eliminating part is provided so as to cover a peripheral part of the sensing electrode and a surface of the solid electrolyte substrate around the sensing electrode.

7. A gas sensor according to claim 1 or 2,
wherein the sensor element part includes:
a gas detecting part containing an oxide semiconductor; and
a pair of electrodes electrically connected to the gas detecting part; and
wherein the moisture eliminating part is provided so as to cover at least a part of a surface of the gas detecting part.
